# EUROPEAN PATENT APPLICATION

(11) **EP 1 701 149 A1**
(43) Date of publication of application: **13.09.2006**
(21) Application number: 06101235.7
(22) Date of filing: 03.02.2006
(51) Int. Cl.: G01N 21/03, G01N 21/11, B01L 3/00

(54) **Capillary cuvette for small sample volumes**

(30) Priority: 08.03.2005 US 75489
(71) Applicant: Agilent Technologies, Inc., Palo Alto CA 94303-0870 (US)
(72) Inventor: Ji, Zhenghua, 19803, Wilmington (US); Rees, Diane M., 94086, Sunnyvale (US)
(74) Representative: Barth, Daniel Mathias

(57) **Abstract**

A sample cell (10) for retaining a fluid sample comprising a handle (14) and parallel plates (12). The parallel plates (12) are coupled to the handle (14) and are spaced at a distance thereby defining a cavity (16) which is open on at least three sides. The distance between the plates (12) allows capillary action to draw and retain a fluid sample in the cavity (16). Methods of using the sample cell (10) are also disclosed.

## Description

### Background

Optical spectroscopy is based on six phenomena: absorption, fluorescence, phosphorescence, scattering, emission and chemiluminescence. Typical spectroscopic instruments contain five common components, a source of radiant energy, an at least partially transparent sample container, a device that isolates a restricted region of the spectrum for measurement (e.g., ultraviolet, visible, or infrared), a radiation detector, and a signal processor and readout.

One field is absorption spectroscopy, in which the optical absorption spectra of liquid substances and mixtures are measured. The absorption spectrum is the distribution of light attenuation (due to absorbance) as a function of light wavelength. In a simple spectrophotometer, the sample substance which is to be studied, usually a gas or liquid, is placed into a transparent container, also known as a cuvette or sample cell. Collimated light of a known wavelength, A, i.e. ultraviolet, infrared, visible, etc..., and intensity lₒ, is incident on one side of the sample cell. A detector, which measures the intensity of the exiting light, I, is placed on the opposite side of the sample cell. The thickness of the sample is the distance d, that the light propagates through the sample. For a sample consisting of a single, homogenous substance (analyte), the light transmitted through the sample will generally approximately follow a well known relationship known as Beer's law which in part, states that the shorter the optical pathlength d, the less the absorption of light. If λ, Iₒ, I, d, ε(λ), are known, analyte concentration, c, can be determined by OD(λ)=c*ε(λ)*d; where: ε(λ) is the extinction coefficient of the substance at wavelength A; OD(λ) is the optical density of the sample at wavelength λ; (OD=-Log of the ratio: light transmitted (exiting)/light incident. (-Log₁₀ I/Iₒ); c is the concentration of the substance (analyte); d is the pathlength or thickness of the sample through which the light propagates.

Beer's law is also applicable to mixtures of several different substances (analytes), j, each with known extinction coefficients, εⱼ, and relative concentrations cⱼ. In such a case, the optical density of the sample is given by: OD(λ)=Σcⱼ * εⱼ *(λ)*d. Thus, if the absorption spectrum for a given substance (analyte) is known, its presence and concentration in a sample may be determined.

For analysis of fluids of limited volume, for example less than 10 µL, or fluids of high value (e.g., biological samples which may be present in limiting quantities, such as samples of protein or nucleic acids), it is desirable to keep the sample volume required for spectroscopic analysis low. As sample volume decreases, it becomes more difficult to apply sample into a measurement area of a cuvette without generating air bubbles, or sectioned liquid spots, leading to errors.

A need exists for a spectroscopy sample cell for analysis of small fluid volumes that is inexpensive and does not require specialized or complicated tools to transfer sample from a container into the measurement area of a sample cell.

### Summary

In general terms, the present invention relates to a sample cell for small sample volumes and a method of using such a sample cell for determining an optical property of a fluid sample in the sample cell, e.g., such as by optical spectroscopy.

One aspect of the present invention is a sample cell including two parallel plates defining a cavity open on three sides. The distance from one plate to the other plate is selected to permit the fluid sample to enter through an open side and be retained in the cavity by capillary force. Such a sample cell can also include a handle with the parallel plates being coupled to the handle.

Another aspect of the present invention is a sample cell including a handle, two parallel plates and two deformable regions. Each deformable region operatively couples a plate to the handle. Each plate has a planar surface. The planar surface of first plate and the planar surface of the second plate define between them a measurement zone. The distance between planar surface of first plate and the planar surface of the second plate is selected to allow capillary action to draw and retain a fluid sample in the measurement zone. The deformable regions are configured to alter the distance between the plates. In an embodiment, a clamping device is operably connected to the deformable regions to provide a deforming force.

In an embodiment, the planar plates are formed of optically transparent material such that optical measurements, such as spectrophotometric measurements, are taken through the plates and sample. In an embodiment, the optical measurement is taken through the sample space by way of two open sides.

In another aspect, the present invention includes a method employing the present sample cell for determining an optical property of a fluid sample. Such a method includes providing a sample cell including two parallel planar plates defining a sample space open on at least three sides. The distance from one planar plate to the other planar plate is selected to permit the fluid sample to enter through an open side and be retained in the sample space by capillary force. The method can also include contacting the sample cell with a fluid sample and drawing fluid sample into the sample space; deforming the sample device by applying one or more clamps to the deformable regions thereby selecting a distance between the first plate and the second plate and defining the volume of a measurement zone; placing the sample cell into a detection device such as a spectrophotometer in an orientation such that the light path passes through the measurement zone; and determining an optical property of the sample, e.g., such as the absorbance of an analyte (e.g., such as DNA, RNA, proteins, cells, etc.) in the sample. In one aspect, characterizing the analyte comprises determining its concentration in the sample and/or its purity.

### Brief Description of the Drawings

Figure 1 is a perspective illustration of an embodiment of a sample cell.
Figure 2 schematically illustrates a side view of an embodiment of a sample cell.
Figure 3 schematically illustrates a side view of an embodiment of a sample cell.
Figure 4 schematically illustrates a side view of an embodiment of a sample cell.
Figure 5 schematically illustrates a cross-section of an embodiment of a sample cell.
Figure 6 is a perspective illustration of a possible embodiment of a sample cell.

### Detailed Description

Various embodiments of the present invention will be described in detail with reference to the drawings, wherein like reference numerals represent like parts throughout the several views. Reference to various embodiments does not limit the scope of the invention, which is limited only by the scope of the claims attached hereto. Additionally, any examples set forth in this specification are not intended to be limiting and merely set forth some of the many possible embodiments for the claimed invention.

### Definitions

In the present application, unless a contrary intention appears, the following terms refer to the indicated characteristics.

As used herein, the terms indicating geometry such as orientation (e.g., "parallel" or "perpendicular") or shape (e.g., "planar") include real world embodiments of the geometric concept. For example, the terms parallel, perpendicular, or planar modifying the orientation or shape of any article or articles includes the variation in that orientation or shape encountered in real world conditions of producing sample cells from materials such as polymers, ceramics, minerals (e.g. quartz or quartz glass), or silicates (e.g., glass). For example, the terms parallel, perpendicular, or planar modifying the orientation or shape of any article or articles includes the variation and degree of care typically found in a sample cell for commercial sale and for use in a clinical, research, or analytical laboratory. Terms indicating geometry such as orientation (e.g., "parallel" or "perpendicular") or shape (e.g., "planar") include equivalents to those orientations or shapes.

The term "light" refers to electromagnetic radiation of a wavelength λ, within the visible or near visible range, from approximately 100-30,000 nanometers, including far-ultraviolet, ultraviolet, visible, infrared and farinfrared radiation. Similarly, throughout this disclosure, the term "optical" is defined as pertaining to or utilizing light as defined herein. The term "light path" refers to the path from source to sample to detector in a spectrophotometer.

As used herein, a "handle" refers to a portion of a sample cell that can be grasped, e.g., by a hand or by a robotic device. A handle may be configured in a variety of dimensions and shapes, e.g., suitable for containment in a spectrophotometer or integration with a robotic transfer station.

It will also be appreciated that throughout the present application, that words such as "top", "upper", and "lower" are used in a relative sense only.

Reference to a singular item, includes the possibility that there are plural of the same items present.
"May" means optionally.

Methods recited herein may be carried out in any order of the recited events which is logically possible, as well as the recited order of events.

All patents and other references cited in this application, are incorporated into this application by reference except insofar as they may conflict with those of the present application (in which case the present application prevails).

### The Sample Cell

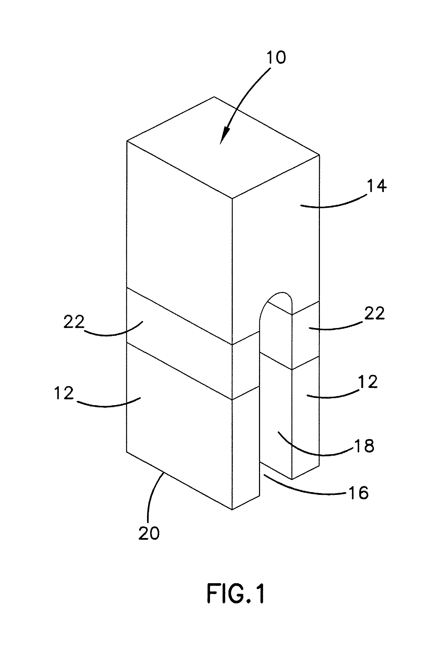

The present invention relates to a sample cell suitable for optical spectroscopy of fluid samples, such as samples comprising biological molecules, and a method of using such a sample cell. An embodiment of a sample cell of the present invention is illustrated in Figure 1. Sample cell 10 comprises two parallel plates 12 connected to an upper handle 14 by sections 22. Sample cell 10 also comprises cavity 16 defined by substantially planar inner surfaces 18 of parallel plates 12. Cavity 16 is open at three sides, including bottom 20 of sample cell 10.

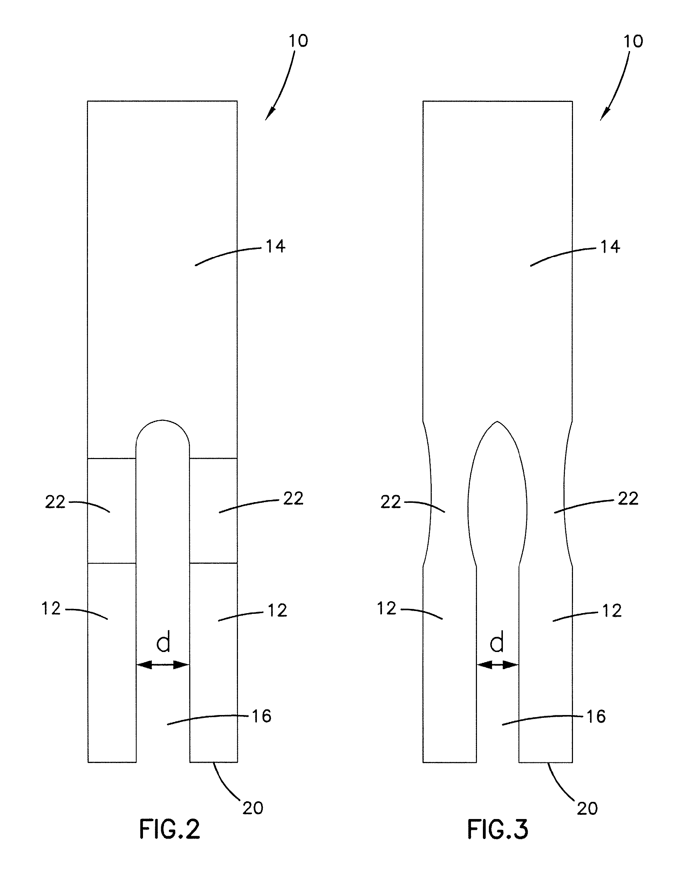

The distance between planar inner surfaces 18 of parallel plates 12 is selected such that a fluid sample is drawn into cavity 16 by capillary force upon contact of bottom 20 with fluid. As shown in Figure 2, the thickness of cavity 16 is the distance from inner surface 18 of one plate 12 to the inner surface of the other. The thickness of cavity 16, with width and height of planar inner surfaces 18 of parallel plates 12, influences the maximum sample volume. In an embodiment, the sample volume held by cavity 16 is 1000 microliters or less. In a further embodiment, the sample volume held by cavity 16 is 100 microliters or less. In a still further embodiment, the sample volume held by cavity 16 is 10 microliters or less.

The substantially planar inner surfaces 18 of parallel plates 12 are wettable in order to provide capillary force to draw and retain a fluid sample in cavity 16. In an embodiment, surface wettability is provided by inherent properties of the material selected for parallel plates 12. In an embodiment, a surface coating is applied to inner surfaces 18 of parallel plates 12 for surface wettability. In an embodiment, inner surfaces 18 of parallel plates 12 are textured for surface wettability. In an embodiment, a combination of material properties, coatings and/or surface texture may be combined to achieve surface wettability. In an embodiment, surface coatings and/or surface texture is applied to inner surfaces 18 for reduction of air bubble formation and/or reduction of formation of sectioned liquid spots.

In an embodiment, sample cell 10 is formed as a unitary component of a single material. Where sample cell 10 is formed of a single material, sections 22 and plate 12 are not segregated from handle 14 and boundary lines in Figure 1 are merely suggestive. In an embodiment, sections 22 are omitted, such that plates 12 are deemed directly connected to handle 14. In an embodiment, sample cell 10, including plates 12, is formed from material transparent to the wavelengths of light being used for spectroscopic measurement. In one aspect, plates 12 are formed from a material which is at least transparent to UV light. In another aspect, plates 12 are formed from a material which is at least transparent to visible light. In still another aspect, plates 12 are formed from a material which is at least transparent to both UV and visible light. In a further aspect, the material is selected to ensure that a measured signal remains within the limit of the linear absorbance range of the apparatus.

In an embodiment, cavity 16 defined by plates 12, also provides an aperture for an optical path so that light can pass through a sample held in cavity 16. When spectroscopic measurement is taken through cavity 16 parallel to plates 12, plates 12 are not limited to transparent materials. In an embodiment plates 12 and/or sample cell 10 are non-transparent materials.

In an embodiment, regions 22 are formed of materials that are deformed with application of force. Force is applied to deformable regions 22 by any known means. Examples include but are not limited to one or more of the following: spring clamps, cams, pneumatic pressure, and electric power.

In an embodiment, the materials of regions 22 undergo plastic deformation, such that an applied force deforms the region and when the force is removed the deformation is retained. In an embodiment, the materials of regions 22 under elastic deformation, such that an applied force deforms the region and when the force is removed, the region substantially returns to its original state. The term "deformable" refers to materials to which applied force causes the material to first deform, either elastically or plastically, before reaching force sufficient to cause material failure.

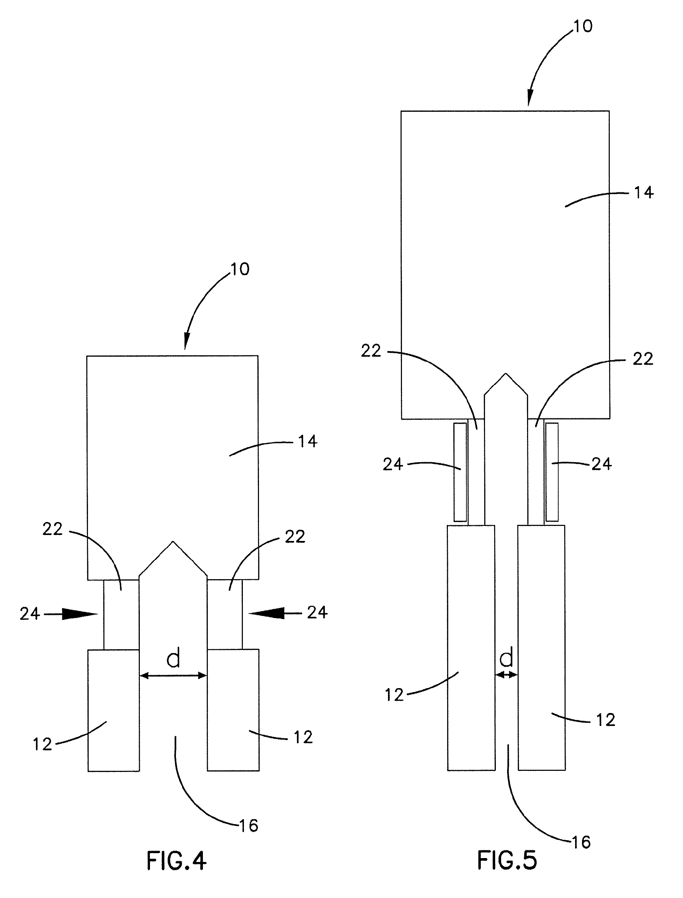

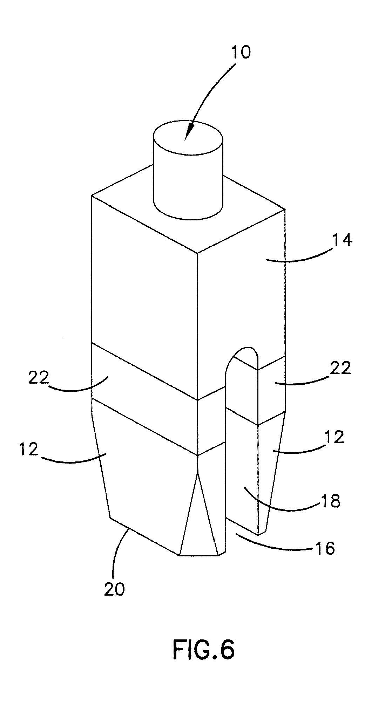

In an embodiment, force is applied and maintained on deformable regions 22 of sample cell 10 before measurement as shown for example in Figure 4. In an embodiment, force is applied and maintained on deformable regions 22 of sample cell 10 during measurement. In an embodiment, force is applied and maintained on deformable regions 22 of sample cell 10 by application of one or more spring clamps. In an embodiment, force is applied and maintained on deformable regions 22 of sample cell 10 by application of two spring clamps 24 positioned on opposite sides of sample cell 10. In an embodiment, clamps 24 are positioned as illustrated in Figure 5.

In an embodiment, deformable regions 22 are deformed to change distance d between inner surfaces 18 of parallel plates 12. When spectrophotometric measurement is taken through sample held in cavity 16 and through plates 12, distance d corresponds to a pathlength for application of Beer's law. In an embodiment, two or more measurements are taken at different distances (i.e., pathlengths) for a single sample through controlled deformation of deformable regions 22.

In one aspect, the pathlength of light is less than about 10 mm, less than about 5 mm, less than about 2 mm, or about 1 mm or less, about 0.5 mm or less, or about 0.25 mm or less.

In an embodiment, deformable region 22 has reduced thickness compared to plates 12. One example is illustrated in Figure 3. In an embodiment, deformable regions 22 and plates 12 are formed of a single material, wherein reduced thickness of deformable regions 22 allows deformation by application of force and increased thickness in plates 12 resists deformation to maintain planarity and relative parallel positioning of plates 12.

In an embodiment of sample cell 10, wherein deformable region 22 has reduced thickness, the actual pathlength can be determined during optical absorption measurement by methods, such as sensor detection or measurement (e.g. proximity sensor), controlled displacement of plates 12 (e.g., deformation of region 22 by an actuator), by applying a known force and applying a force-displacement relationship.

In an embodiment of sample cell 10, plates 12 at bottom 20 are shaped, for example, chamfered, beveled, rounded, or filleted, to fit within the internal volume of a container. One possible embodiment of sample cell 10 is illustrated in Figure 6. In the embodiment of Figure 6, plates 12 at bottom 20 are chamfered for collection of sample from a conically-shaped container, for example, from the lower portion of an Eppendorf tube or well of a multi-well plate.

Sample cell 10, or portions thereof, may be fabricated from any number of suitable materials, using a wide range of fabrication methods. In an embodiment, sample cells or portions thereof are fabricated by injection molding a suitable polymer material. In an embodiment, portions are formed of different materials and joined into a sample cell 10. The choice of particular materials is made based upon their mechanical, chemical, and optical properties.

Mechanical behavior of a material, such as deformation under stress, is characterized by stress-strain properties. Stress-strain plots and modulus information are generally available for selection of materials that deform under stress without failure over the desired percentage change in dimension.

In an embodiment, portions of sample cell 10 are constructed of different materials. In an embodiment, plates 12 are formed of transparent material. In an embodiment, deformable regions 22 are formed of a ductile material, for example elastomeric polymer, flexible plastic, soft metal, or metalloid.

In an embodiment, transparency is desired for plates 12. Transparent materials may also be referred to as being optically clear. In an embodiment, plates 12 are formed from materials such as glass, crystal, quartz, sapphire, silica, silicon rubber, such as crosslinked dimethyldisiloxane, or materials used in optical crystals, such as sapphire or garnet (e.g., undoped Yttrium Aluminum Garnet) or polymeric material. In an embodiment, plates 12 are formed from polymeric materials such as acrylic, polymethylmethacrylate, polycarbonate, ultra high molecular weight or low density polyethylene, and polyacrylonitrile. Additional materials include, but are not limited to, polyolefin, fluoropolymer, polyester, a nonaromatic hydrocarbon, polyvinylidene chloride, polyhalocarbon, such as polycholortrifluoroethylene. Polyolefins may include polyethylenes, polymethylpentenes and polypropylenes, and fluoropolymers may include polyvinyl fluorides. In certain aspects, the material transmits light with a range of about 200-1100 nm, from about 180-1000 nm, and/or transmits light of a wavelength greater than about 900 nm.

In an embodiment, plates 12 are formed of a transparent material which is attached to regions 22 or handle 14 (when regions 22 are omitted). In an embodiment, regions 22 and/or handle 14 are formed from material different from that used to form plates 12.

In certain aspects, a portion of the outer surface of the plates 12 (e.g., the surface opposing the surface 18 facing the cavity 16) may be coated by a hydrophobic coating to eliminate/prevent any liquid sample residue remaining on the outer surface. The coating the coating may be transparent or semi-transparent to electromagnetic radiation. Suitable coatings include but are not limited to: polydimethylsiloxane silicon rubber, PTFE (e.g., Teflon), a polyacrylate, and the like.

In an embodiment, sample cell 10 is formed of a transparent polymeric material, such as, but not limited to, acrylics, polymethacryates (polymethylmethacrylates), polycarbonates, ultra high molecular weight or low density polyethylenes, and polyacrylonitriles or other such materials as are used to form the plates 12. In a further embodiment, formation of sample cell 10 from a transparent polymeric material is combined with reduced thickness in deformable regions 22.

The relative sizes of the handle, plates, and regions of the sample cells illustrated herein are readily altered. In an embodiment, dimensions of a sample cell 10 are customized for spectrophotometer constraints. The minimum height of plate 12 is determined such that when sample cell 10 is placed in a spectrophotometer, sample held in cavity 16 is positioned in the light path.

In certain aspects, the size and dimensions of the handle are adapted for integration into a robotic transfer device. In one embodiment, the handle can be used to seat the sample cell in a spectrophotometer in a position that aligns the cavity 16 or the plates 12, with a light path formed in the spectrophotometer which enables sufficient light passing through a sample to be detected by a detector portion of the spectrophotometer.

In an embodiment, sample cell 10 is sized for collection of a fluid sample from a sample container of limited volume. Examples include, but are not limited to: individual wells of microtiter plates (e.g., 12-well, 24-well, 48-well, 96-well ..., etc.), 1.5 mL Eppendorf tubes and 0.5 mL Eppendorf tubes. Where a sample container is of limited volume, the width of a plate 12 is less than the diameter of the sample container. In an embodiment, the width of a plate 12 is from about 2.0 mm to about 10 mm. In a further embodiment, the width of a plate 12 is from about 2.5 mm to about 5 mm. In an embodiment, the additive thickness of plates 12 with distance d is equal to or less than the width of a plate 12.

In an embodiment of sample cell 10, the height and width of plates 12 is sized to be about the same size as or only slightly larger than the cross-sectional area of the light beam passed through sample cell 10. Any sample loaded into cavity 16 between plates 12 that is not in the path of the light beam is not analyzed by the spectrophotometer. This embodiment prevents unnecessary waste of the sample from sample containers of limited volume, such as microtiter plates.

The distance between planar inner surfaces 18 of parallel plates 12 is selected such that when bottom 20 of sample cell 10 contacts a fluid, a sample of the fluid is drawn into cavity 16 by capillary force, thereby loading sample into the cell. The thickness of cavity 16 is the distance from the inner surface of one plate to the other. In an embodiment, thickness d is about 0.1 mm to about 5 mm. In a further embodiment, thickness d is from about 0.1 mm to 3 mm. In an additional embodiment, thickness d is from about 3 mm to 7 mm during loading and thickness d is reduced for measurement by application of force to deformable regions 22.

The combination of height and width of plates 12 with the thickness of cavity 16 directs the maximum sample volume held by sample cell 10. The combination of height, width and d is readily varied to achieve an unlimited number of combinations for a desired sample volume. Additionally, as described above, thickness of cavity 16 is variable before and/or during use.

In an embodiment, the sample volume held by cavity 16 is 1000 microliters or less. For example, plate 12 is less than or equal to 20 mm in height, less than or equal to 10 mm in width, and d is less than or equal to 5 mm. In an embodiment, the sample volume held by cavity 16 is 100 microliters or less. For example, plate 12 is equal to or less than 7 mm in height, equal to or less than 5 mm in width, and d is equal to or less than 3 mm. In an embodiment, the sample volume held by cavity 16 is 20 microliters or less. For example, plate 12 is equal to or less than 4 mm in height, equal to or less than 3.5 mm in width, and d is equal to or less than 2 mm. In an embodiment, the sample volume held by cavity 16 is from 1 microliter to 10 microliters. For example, plate 12 is equal to or less than 4 mm in height, equal to or less than 3 mm in width, and d is equal to or less than 1 mm.

Thickness of Plate 12 is dependent on the material selected and should be sufficiently thick for planarity, while a maximum thickness is dependent on transparency and/or overall size of sample cell 10. Regions 22 may be the same thickness as or have a smaller thickness than plate 12 for selective deformation of regions 22.

In an embodiment of sample cell 10, bottom of plates 12 is chamfered or filleted to fit a sample container with a conical or tapered internal volume. In an embodiment, the dimension of chamfer/fillet reduces the thickness of the bottom of plates 12 from about 10% to almost 100% of plate thickness. For example, in further embodiments, the thickness of the bottom of plates 12 is chamfered to about 50% of plate thickness. In an embodiment, the bottom of plate 12 is chamfered or filleted to minimize residue from the liquid sample collected onto plates 12 outside of cavity 16.

Handle 14 is not limited to the relative size or shapes illustrated herein. In an embodiment, handle 14 includes one or more of the following: tab, slot, slit, peg, hole, lip, ball, socket, etc... In an embodiment, handle 14 is shaped for carrying in a rack or other carrier for automation of sampling and/or measurement. In an embodiment, a plurality of sample cells are arranged and reversibly secured in a rack for concerted sampling of multicompartment containers or a racked plurality of containers. In an embodiment, handle 14 is enlarged or elongated for manipulation by human hands.

### Methods Employing the Sample Cell

Sample cell 10 is filled with a fluid sample by contacting fluid to be analyzed with the bottom of sample cell 10. For example, the sample cell 10 is dipped into a container holding fluid to be analyzed by either hand or machine movement. Fluid is drawn into cavity 16 through capillary force. The sample quantity in cavity 16 needs to be sufficient to allow alignment of the light path from a light source to detector to pass through the sample, when sample cell 10 is placed in a device for analysis of optical properties of a sample (e.g., such as a spectrophotometer). In an embodiment, cavity 16 is filled in the area for measurement (e.g., such as spectroscopic measurement). In an embodiment, cavity 16 is partially filled with sample for measurement. Sample cell 10 is removed from contact with the container of fluid and moved to the device for measurement and analysis.

In an embodiment, measurements are taken with a light path perpendicular to planar surfaces 18 of plates 12. For example, during measurement light from a source passes through one plate 12, through sample held in cavity 16, through a second plate 12 and into a detector. The thickness of the cavity 16 corresponds to pathlength d that the light propagates through the sample for measurement. In embodiments where light passes through plates 12 during measurement, plates 12 are transparent.

In an embodiment, pathlength d is controlled and detected. Pathlength d is modulated by application of force. Force applied to deformable regions 22, as shown for example in Figure 4, is manually controlled or alternately computer controlled or automated. In an embodiment, force is applied and measurement taken at a determined pathlength. In an embodiment, applied force is varied over time as signal is read from the detector resulting in a plurality of measurements over a range of pathlengths.

The light spectra from various pathlengths defined between deformable plates 12 are stored in the result data file and analyzed to show the adequate result at specific pathlength. The analysis algorithm would be: maximize the adsorption, maintain linear adsorption range or exclude saturation readings. For an example, if the spectra reading from a sample under initial pathlength is in the saturated ranges, the spectra reading from feasible reduced pathlength will be presented as final measurement result. For another example, if the spectra reading from a sample under reduced pathlength is almost zero, the spectra reading from initial pathlength would be used as final measurement result.

In an embodiment, measurements are taken with a light path parallel to the planar surfaces 18 of plates 12. For example, during measurement, light from a source passes through an opening between plates 12, through sample held in cavity 16, through an opening between plates 12 and into a detector. Pathlength that the light propagates through the sample for measurement corresponds to the width of plates 12. In embodiments where light passes between plates 12 during measurement, plates 12 need not be transparent.

In certain embodiments, UV-visible spectrophotometry is used to characterize analytes in a sample held in cavity 16 (e.g., in solution or suspension phase) by detecting, monitoring and/or quantitating an optical property of the sample, such as the absorbance spectra of analytes in the sample. The light absorbance of a sample depends on the pathlength L of light passing through the sample, as well as the concentration of light absorbers (e.g., biomolecules such as DNA, RNA, proteins, or cells, etc.) in the sample solution and the wavelength (λ) of light being used to characterize the sample. The wavelengths of UV-visible light range from 200 nm to 800 nm, while ultraviolet wavelengths range from about 200-400 nm. Most biological samples absorb electromagnetic radiation at wavelengths ranging from 200 nm to 800 nm, mostly 230 nm, 260 nm and 280 nm.

In one embodiment, a biological sample, e.g., comprising a biopolymer such as a nucleic acid, peptide, polypeptide and/or protein, is drawn into the cavity 16 of the sample cell by capillary action. In one aspect, the sample is about 10 µl or less, about 5 µl or less, about 2 µl or less, about 1 µl or less, or about 500 nl or less.

The sample cell is oriented in the device in a positional relationship to a light source and detector such that a light path is provided from the light source through the measurement area of the sample cell, to the detector. In certain aspects, the light path is at least partially defined by an optical waveguide, for example a source-side optical fiber and/or a detection-side optical fiber. In certain other aspects, other optical elements may be used to further define the light path.

In one aspect, a characteristic of a component (e.g., a nucleic acid or protein) in a sample can be determined by comparing an optical property of a sample without the component to an optical property of the sample within the component. A standard curve may be used to correlate optical properties with characteristics of the sample (e.g., such as concentration of a biomolecule within the sample). In certain aspects, the purity of a sample is detected by comparing ratios of absorbances of a sample, e.g., to compare the relative amounts of DNA, RNA, proteins, and/or salts and other contaminants in a sample.

It should be noted that, as used in this specification and the appended claims, the singular forms "a," "an," and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

All publications and patent applications in this specification are indicative of the level of ordinary skill in the art to which this invention pertains and are incorporated herein by reference in their entireties.

The invention has been described with reference to various specific and preferred embodiments and techniques. However, it should be understood that many variations and modifications may be made while remaining within the spirit and scope of the invention.

## Claims

1. A sample cell for retaining a fluid sample, the sample cell comprising a handle and parallel plates;
the parallel plates being coupled to the handle;
the parallel plates being spaced at a distance and defining a cavity;
the cavity being open on at least three sides;
the distance between the plates allowing capillary action to draw and retain a fluid sample in the cavity.

2. The sample cell of claim 1, further comprising:
deformable regions;
the deformable regions operatively coupling the parallel plates to the handle;
the deformable regions being configured to alter the distance between the plates.

3. The sample cell of claim 1 or 2, further comprising:
a clamping device;
the clamping device being operatively coupled to the deformable regions;
the clamping device being configured to apply deforming force to the deformable regions.

4. The sample cell of claim 1 or any one of the above claims, wherein the plates are generally planar, and the plates preferably comprise optically transparent material.

5. The sample cell of claim 1 or any one of the above claims, comprising at least one of the features:
the distance between the plates is less than about 10 mm;
the distance between the plates is about 0.1 mm to about 5 mm;
the cavity has a volume of about 1 to about 100 microliters;
the cavity has a volume of less than about 10 microliters.

6. A sample cell for retaining a fluid sample, the sample cell comprising:
a handle;
a first plate having a planar surface, the first plate connected to the handle by a first deformable region;
a second plate having a planar surface, the second plate connected to the handle by a second deformable region; and
the planar surface of first plate and the planar surface of the second plate defining between them a measurement zone;
the distance between planar surface of first plate and the planar surface of the second plate selected to allow capillary action to draw and retain a fluid sample in the measurement zone.
the deformable regions being configured to alter the distance between the plates.

7. The sample cell of the preceding claim, comprising at least one of the features:
the measurement zone is open on three sides;
the first plate and the second plate comprise optically transparent material;
a clamping device, the clamping device being operatively coupled to the first and the second deformable regions, the clamping device being configured to apply deforming force to the first and the second deformable regions.

8. The sample cell of claim 6 or any one of the above claims, wherein the sample cell is formed of an optically transparent polymeric material.

9. The sample cell of the preceding claim, comprising at least one of the features:
the deformable regions have a reduced thickness compared to the planar plates;
the optically transparent polymeric material comprises of acrylic, polymethacryate, polymethylmethacrylate, polycarbonate, ultra high molecular weight polyethylene, low density polyethylene, polyacrylonitrile, or mixture thereof.

10. A method of determining an optical property of a fluid sample, the method comprising:
providing a sample cell comprising two parallel planar plates defining a sample space open on at least three sides, wherein the distance from one planar plate to the other planar plate is selected to permit the fluid sample to enter through an open side and be retained in the sample space by capillary force;
contacting the sample cell with a fluid sample and drawing fluid sample into the sample space;
deforming the sample device by applying one or more clamps to the deformable regions thereby selecting a distance between the first plate and the second plate and defining the volume of a measurement zone;
placing the sample cell into a device for determining the optical property of the sample in an orientation such that the light path passes through the measurement zone; and
determining an optical property of the fluid sample.

11. The method of the preceding claim, comprising at least one of the features:
the device is a spectrophotometer;
passing light through the measurement zone and the planar plates;
passing light through the measurement zone but not through the planar plates;
the fluid sample is less than 10 µl;
the light path is less than 10 mm.
